# EUROPEAN PATENT SPECIFICATION

(11) **EP 3 342 092 B1**
(45) Date of publication and mention of the grant of the patent: **12.12.2018**
(21) Application number: 16784976.9
(22) Date of filing: 04.10.2016
(51) Int. Cl.: H04L 9/00, H04W 52/02

(54) **ACTIVATION PROCEDURE FOR LOW RADIATION WIRELESS NETWORKS**
VERFAHREN ZUR AKTIVIERUNG STRAHLUNGSARMER DRAHTLOSER NETZWERKE
PROCÉDURE D'ACTIVATION POUR DES RÉSEAUX SANS FIL À FAIBLE RAYONNEMENT

(30) Priority: 08.10.2015 NL 1041509
(43) Date of publication of application: 04.07.2018
(73) Proprietor: Assumite Gladium Spiritus B.V., 2263 AB Leidschendam (NL)
(72) Inventor: SCHRADER, Johan Hendrik Rutger, 8251TK Dronten (NL)
(74) Representative: Dennemeyer & Associates S.A.
(86) International application number: PCT/NL2016/000018
(87) International publication number: WO 2017/061855

(56) References cited:
- WO-A1-2004/075583
- US-A1- 2007 171 910
- US-A1- 2013 343 198
- US-B2- 8 391 261

## Description

### Field of the invention

The present invention relates to a method for operating an access point (AP) or base station in a wireless network, and an access point adapted thereto, which network comprises at least one access point and at least one wireless device communicating with one another by means of radio frequency signals, wherein said access point may transmit a beacon frame, repeatedly at a beacon interval, required by said wireless device in order for said wireless device to recognize the wireless network. The invention especially relates to low radiation wireless networks.

### Background of the invention

In recent years, there has been an enormous increase in man-made artificial electromagnetic fields. High frequency sources include signals from for example mobile telephony, DECT phones and wireless LAN. In the nineties, digital (GSM) mobile telephony was introduced and took off rapidly, and the number of antenna masts increased 10.000-fold. Only in the past decades, many new wireless technologies including WLAN were introduced into the home and office environment. The average user exposure to electromagnetic radiation has increased from a power density of below 0.1 micro-watts per square meter in the beginning of the nineties to up to 10.000 micro-watts per square meter or higher today in everyday situations, many hours per day.

The potential health risk of artificial electromagnetic radiation is evidenced by many (recent) studies, overviews and resolutions, some of which are given below:
- "Bio-Initiative Report," C. Sage, D.O. Carpenter et al., http://www.bioinitiative.org, 2012;
- "The potential dangers of electromagnetic fields and their effect on the environment," Resolution 1815 of the Council of Europe, Doc. 12608, May 2011;
- "Health concerns associated with electromagnetic fields," Resolution of the EU parliament, P6_TA(2009)0216, April 2009;
- "Guideline of the Austrian Medical Association (ÖÄK) for the diagnosis and treatment of EMF-related health problems and illnesses (EMF syndrome)," Austrian Arztenkammer, March 2012;
- "LOI n° 2015-136 du 9 fevrier 2015 relative a la sobriété, a la transparence, a l'information et a la concertation en matiere d'exposition aux ondes electromagnetiques," Article 8, Law of France, concerning legislation that makes WLAN illegal in kindergartens with children under 3 years of age.

Considering the aforementioned, there is a strong need to develop technologies that minimize electromagnetic radiation while still offering people the advantages of a modern technology-driven life.

In a wireless network, one or more access points, also called base stations, may exist that are able to communicate with one or more wireless devices (also called clients), wherein the communication occurs by means of radio frequency signals.

Beacon frames, as defined in the IEEE 802.11 standard, are frames containing information such as the network name, or Service Set Identifier (SSID) and the supported data rates. The SSID identifies the access point in a readable form, for example "MyWiFiPoint". The standard beacon interval setting for 802.11 WLAN is 100 milliseconds, which means 10 beacon frames per second are transmitted. This results in a measurable 10 pulses per second, continuously transmitted by the access point and causing a continuous 24/7 pulsing of electromagnetic radiation, resulting in a high level of electrosmog with a significant biological impact and health risk.

Wireless devices can use either passive or active scanning when searching for available networks to connect to. To do a passive scan, the wireless device tunes to each channel in turn, and waits a typical beacon interval to gather beacon frames. A wireless device may actively scan the channels by sending a probe request frame, which is one of the management frames as defined in the IEEE 802.11 standard. In active scanning the wireless device sets the radio to the first supported channel, transmits a probe request frame, and waits approx. 40ms to gather probe response frames from APs on that channel, before moving on to the next channel. Nearly all modern wireless devices support the active scanning method because it results in a faster build-up of the list of available WLAN networks.

One method for reducing electromagnetic radiation is to simply turn off the beacon signal when no wireless devices are connected, as described for example in patent application WO 2004/075583. For wireless home telephones (DECT) a similar technique was developed called Eco-Mode-plus where the base station is 100% radiation free in stand-by. A low radiation WLAN access point could use the 802.11 probe-request frame as an activation signal to wake up only when a wireless device needs to connect. However, in a typical consumer situation, there are usually neighbouring third party devices that often transmit probe-request frames without ever connecting to the access point. For example a neighbouring wireless device that is often in the connection range of the access point may transmit probe request frames while connecting with a third party AP. Also, other wireless devices that cannot find (known) WLAN networks may keep transmitting probe request frames intermittently. Also, certain APs transmit probe request frames every few minutes to scan their environment. When a low radiation AP would respond to all of those, it would cause unnecessary wake-up of the AP all the time. Electromagnetic radiation emissions may then still be significant, because every time the transmission of beacon frames would be started.

A more selective reaction to probe-request frames would therefore be useful for emissions reduction. It would greatly reduce unnecessary waking up of the access point if the AP would only respond to probe request frames from devices that are registered instead of from all devices. For example in US patent US 8,391,261 it is described how the generation of beacons is started only if the probe request frame is from a known station. However, responding only to registered devices removes the possibility for any new and therefore unregistered devices to connect to a low radiation AP for the first time, which severely impacts the usability of such an access point. The user of an unregistered wireless device would for example need to add said unregistered device manually to the list of the registered devices of the access point before being able to connect. This is inconvenient for the user and often impractical. Therefore a way is needed to respond selectively to probe request frames in order to allow an unregistered wireless device to connect to the access point for the first time, for wireless devices that are not registered yet, while at the same time minimizing unnecessary wake-up of a low radiation AP. The task underlying the present invention is to provide a solution for the above.

### Summary of the invention

In a wireless network (WLAN), one or more access points (APs), also called base stations, may exist that can communicate with one or more wireless devices - also called stations or clients - wherein the communication occurs by means of radio frequency signals. In a possible scenario, there may be one access point, adapted to function in accordance with the present invention, hereinafter referred to as a low radiation AP, wherein beacon frames are not transmitted in the event that not any wireless device is connected to the access point, and the transmission of beacon frames is started in the event that a probe-request frame is received from a wireless device that is on a register list, characterized by the following steps:
- running an activation procedure in the event that a probe-request frame is received from a wireless device that is not on the register list, to automatically decide whether or not to start transmitting beacon frames;
- adding an unregistered wireless device to the register list automatically in the event that this wireless device has been successfully connected to the access point.

This works as follows. When a wireless device located in the basic service area (BSA) of the low radiation AP starts searching for an AP, the wireless device, if using active scanning, sends a probe-request frame. The low radiation AP, upon receiving this probe-request frame, looks in its register list. If the low radiation AP finds the wireless device in its register list, it starts transmitting beacon frames, so that the wireless device can find the network and connect. If the wireless device is not found in the low radiation AP's register list, the low radiation AP runs an activation procedure, in order to automatically decide whether or not to start the transmission of beacon frames. In the event that the transmission of beacon frames has been started, if subsequently also the unregistered wireless device has been successfully connected to the low radiation AP, said device is automatically added to the register list in the low radiation AP. However, if the unregistered wireless device fails to successfully connect to the low radiation AP, the transmission of beacon frames is stopped again.

When attempting to find a wireless network, as defined in the IEEE 802.11 standard, first a wireless device either scans for beacon frames passively or transmits a probe-request frame, upon which the AP answers with a probe response frame. Next, the wireless device may authenticate with the AP. In the final step, the wireless device sends an association request to the AP, upon which the AP sends an association response frame. Once the association is finished, possibly also encryption may be negotiated. We define a wireless device here as 'successfully connected' when it is authenticated and associated with the AP, and in case of a secured encrypted connection it has also successfully completed the encryption and security handshaking, meaning that the wireless device user has entered the correct wireless network password.

In a preferred embodiment of the method according to the present invention, the transmission of beacon frames is started in said activation procedure in at least one of the following events:
(1) the number of probe-request frames x1 received in a predetermined time interval t1 from a specific unregistered wireless device does not exceed a predetermined maximum value m1 and the wireless device is not on a rejection list;
(2) a predetermined time period t2 after first use of the access point has not expired yet;
(3) the register list is empty;
(4) a directed probe-request frame is received from an unregistered wireless device, directed to an SSID of said access point;
(5) a button on the access point is pushed.

The activation procedure starts the transmission of beacon frames only for those unregistered wireless devices which are meant and legitimate to be connected, avoiding the unnecessary transmission of beacon frames. The events in which the activation procedure starts the transmission of beacon frames are now described. The first of those events (event 1) is when the number of probe-request frames x1 received in a predetermined time interval t1 from the unregistered wireless device, without the device ever successfully connecting to the low radiation AP, does not exceed a predetermined maximum value m1 while the wireless device is not on a rejection list. The rejection list will be discussed later.

Another situation is when the access point has just been installed. For that situation two options are provided to register the first wireless devices. One event (event 2) is when the low radiation AP is turned on for the first time and a predetermined time interval has not expired yet. In that case the low radiation AP will respond to all probe request frames until the end of this time interval. Another event (event 3) is when the register list is still empty. In this case the procedure allows for fail-safe connection with the first, still unregistered wireless device. As soon as at least one wireless device is registered, electromagnetic emissions from beacon frames are then strongly reduced.

Two further options are provided for the user to start the transmission of beacon frames: event 4 and event 5. When a directed probe-request frame is received from an unregistered wireless device, directed to an SSID of said access point, the transmission of beacon frames is started (event 4), because a directed probe-request frame means that the user specifically wants to connect with the low radiation AP (user has typed in the SSID). This option is also useful for connecting with wireless devices that are on the rejection list. Finally (event 5) it is also possible for the user to manually start the transmission of beacon frames by pushing a button on the low radiation AP.

A preferred embodiment of the method according to the present invention is characterized further by updating the rejection list in at least one of the following events:
- adding an unregistered wireless device to the rejection list in the event that the number of probe-request frames x3 received from this wireless device in a predetermined time interval t3 exceeds a predetermined maximum value m3;
- removing a wireless device from the rejection list in the event that the number of probe-request frames x4 received from this wireless device in a predetermined time interval t4 is below a predetermined maximum value m4;
- adding an unregistered wireless device to the rejection list in the event that it is monitored that the device is connected to another access point marked as no-family;
- removing a wireless device from the rejection list in the event that it is monitored that the device is connected to another access point marked as family;
- removing a wireless device from the rejection list in the event that the device is added to the register list after it has been successfully connected to the low radiation access point.

The rejection list makes it possible for the low radiation AP to recognize and categorize the unregistered, neighbouring wireless devices that are often in its BSA and are often transmitting probe request frames without subsequently connecting to the low radiation AP. The rejection list enables the low radiation AP to avoid the unnecessary transmission of beacon frames. The third, fourth and fifth event described above require the monitoring of connections between unregistered wireless devices and neighbouring access points. In the above events, 'monitor[ing] that the device is connected to another access point' is defined as the situation where any 802.11 management or data frames transmitted between an unregistered wireless device and an other access point in the radio environment are monitored by the low radiation AP, from which the low radiation AP can conclude that the wireless device is successfully connected to that other access point.

For the above purpose a list of other access points in the radio environment is maintained by the low radiation AP. A distinction is made between no-family access points, which may for example be owned by a neighbour and used in a neighbour's house, and family access points, which may for example be owned and used by the user of the low radiation AP, and be in the same house. The family and no-family type of access points are introduced to be able to recognize additional access points that the user may also own or use, and discern them form access points owned by for example neighbours. The low radiation AP may automatically add an other access point to this list of other APs when it monitors any frames transmitted by the other AP, with any destination address, such as data frames or 802.11 management frames like beacon frames, probe response or request frames, authentication, or association frames. The low radiation AP may automatically remove an other access point from the list when less than a predefined number of frames are monitored coming from that access point during a certain predefined time interval.

A preferred embodiment of the invention is characterized by updating the list of other access points in at least one of the following events:
- marking an access point in the list as family in the event that it is monitored that a wireless device which is listed in the register list is connected to that access point;
- removing the mark of family from an access point in the list in the event that it is monitored that none of the wireless devices which are listed in the register list are connected to that access point during at least a time interval t5;
- marking an access point in the list as no-family in the event that it is monitored that a wireless device which is listed in the rejection list is connected to that access point, unless that access point is already marked as family;
- removing the mark of no-family from an access point in the list in the event that it is monitored that none of the wireless devices which are listed in the rejection list are connected to that access point during at least a time interval t6;
- updating access points in the list when the user manually marks them as family or no-family.

### Improving effective receiver sensitivity.

The mechanism of starting the transmission of beacon frames hinges on the correct reception of probe-request frames. Those signals may be very weak, coming in from wireless devices with small antennas, and the reception may suffer from radio interference. When the probe-request frames are missed, and consequently the transmission of beacon frames is not started, there is no other way for the wireless device to find the access point. Therefore, in an especially preferred embodiment of the method according to the present invention, the transmission of beacon frames is also started in the event that a probe-response frame is monitored, coming for example from another access point, directed to a wireless device that is on the register list of the low radiation access point. As a result, the effective receiver sensitivity of the access point is enhanced since in addition to a directly received probe-request frame from the wireless devices themselves, also the probe response frames sent by third party access points are used as an indication that a registered wireless device has transmitted a probe request frame.

### Access point.

Another object of the present invention is to provide an access point for a wireless network, comprising at least: a wireless communication component; a data port; a processor; and a memory; wherein the processor is configured to cause the wireless communication component to stop transmitting beacon frames in the event that no wireless devices are connected to said access point, and to start the transmission of beacon frames in the event that a probe-request frame is received from a wireless device that is on a register list. The low radiation access point according to the invention is characterized in that said processor is configured to:
- run an activation procedure in the event that a probe-request frame is received from a wireless device that is not on the register list, to automatically decide whether or not to start transmitting beacon frames;
- add an unregistered wireless device to the register list automatically in the event that this wireless device has been successfully connected to the access point.

Preferably, said activation procedure causes the processor to start the transmission of beacon frames in at least one of the following events:
(1) the number of probe-request frames x1 received in a predetermined time interval t1 from a specific unregistered wireless device does not exceed a predetermined maximum value m1 and the wireless device is not on a rejection list;
(2) a predetermined time period t2 after first use of the access point has not expired yet;
(3) the register list is empty;
(4) a directed probe-request frame is received from an unregistered wireless device, directed to an SSID of said access point;
(5) a button on the access point is pushed.

Still preferably, said processor is configured to update a rejection list in the following events:
- add an unregistered wireless device to the rejection list in the event that the number of probe-request frames x3 received from this wireless device in a predetermined time interval t3 exceeds a predetermined maximum value m3;
- remove a wireless device from the rejection list in the event that the number of probe-request frames x4 received from this wireless device in a predetermined time interval t4 is below a predetermined maximum value m4;
- add an unregistered wireless device to the rejection list in the event that it is monitored that the device is connected to another access point marked as no-family;
- remove a wireless device from the rejection list in the event that it is monitored that the device is connected to another access point marked as family;
- remove a wireless device from the rejection list in the event that the device is added to the register list after it has been successfully connected to the low radiation access point.

Still preferably, said processor is configured to update a list of other access points in at least one of the following events:
- mark an access point in the list as family in the event that it is monitored that a wireless device which is listed in the register list is connected to that access point;
- remove the mark of family from an access point in the list in the event that it is monitored that none of the wireless devices which are listed in the register list are connected to that access point during at least a time interval t5;
- mark an access point in the list as no-family in the event that it is monitored that a wireless device which is listed in the rejection list is connected to that access point, unless that access point is already marked as family;
- remove the mark of no-family from an access point in the list in the event that it is monitored that none of the wireless devices which are listed in the rejection list are connected to that access point during at least a time interval t6;
- update access points in the list when the user manually marks them as family or no-family.

To effectively increase receiver sensitivity, said processor can be configured to cause the wireless communication module to start transmitting beacon frames in the event that a probe-response frame is monitored, directed to a wireless device that is on the register list.

The above provides a low radiation access point that offers the possibility for unregistered wireless devices to automatically register with said low radiation access point, while the low radiation access point remains compatible with existing WLAN technology (for all wireless devices that support active scanning).

Alternatively, the method can also be incorporated into programs or firmware stored on a computer readable medium, like a DVD, USB stick, or hard disk of a server, containing instructions that can be executed on an access point, enabling such an access point to perform the method.

### Detailed description of the invention

Below, the invention will be further illustrated by means of a non-limiting example. In one possible scenario, there may be one access point (AP), adapted to function in accordance with the present invention, hereinafter referred to as a low radiation AP. When there is not any wireless device connected, associated or authenticated, as defined in the IEEE 802.11 standard, with the low radiation AP, the low radiation AP does not transmit beacon frames. The low radiation AP makes use of the active scanning mechanism as defined in the 802.11 standard to be able to detect when a wireless device wants to connect. Upon receiving a probe request frame from a wireless device, the low radiation AP will look in its register list to see if the wireless device is already registered. If the probe-request frame is from a wireless device with an address (or other identification means) that exists in the register list, the transmission of beacon frames will be started in order to allow a connection. If the wireless device is not listed in the register list, the low radiation AP will run an activation procedure in order to automatically decide whether or not to start transmitting beacon frames. The activation procedure may decide to start the transmission of beacon frames if the right conditions are fulfilled. If subsequently the wireless device fails to connect successfully, and no other devices are connected, the low radiation AP will stop transmitting beacon frames again after a time-out period. However when the new wireless device successfully connects to the low radiation AP, the address of said wireless device is added to the register list. It may also be possible to manually add an address to the register list.

The definition of 'connected successfully' is that a wireless device is authenticated and associated with the low radiation AP, and any security and encryption handshaking is completed successfully. In the example of a secure connection according to the IEEE 802.11i standard, this means for example that the Extensive Authentication Protocol over LAN (EAPOL) handshaking is successfully completed, after the user has entered the correct network password. Later when the connection is terminated and there are no other wireless devices connected, the low radiation AP will stop transmitting beacon frames again.

In the activation procedure, the low radiation AP decides whether or not to start the transmission of beacon frames upon receiving a probe-request frame from a non-registered wireless device in a number of events. The low radiation AP should learn to ignore probe request frames from devices that keep transmitting probe request frames periodically without ever connecting successfully to the low radiation AP. However this should be done with care in order not to shut out legitimate wireless devices. The events in which the activation procedure starts the transmission of beacon frames are discussed below.
(1) If the number of probe-request frames x1 received from an unregistered wireless device in a predetermined time interval t1 exceeds a predetermined maximum value m1 without any association with the low radiation AP then the beacon is not switched on. This way, only the wireless devices that transmit more than a given number of probe request frames per time unit - and therefore would make the AP generate a significant amount of electrosmog by starting the transmission of beacon frames every time - are shut out. Also, when a wireless device is on the rejection list the low radiation AP will not start transmitting beacon frames.
(2) If the low radiation AP is installed and turned on by the user for the very first time, it is convenient to have a grace period where the registration of the user's first wireless devices is absolutely fail-safe. It is not a problem if this temporarily results in more emissions because this will only be for a short period, for example just in the first hours or first day after installing the low radiation access point. During this period the low radiation AP may start transmitting beacon frames in reaction to a probe-response from any registered or unregistered wireless device as long as a predetermined time period after first use of the access point has not expired yet, to allow simplified registration of all the user's wireless devices in the period just after installation.
(3) As a second fail-safe option for registering just the first wireless device, the low radiation AP always responds to all wireless devices as long as the table of registered wireless devices is empty. This means that the transmission of beacon frames is started upon receiving probe-request frames from any wireless device as longs as the register list is still empty. As soon as the first wireless device has been registered, this turn-on option ceases to exist.
(4) As a backup option, the low radiation AP will always start transmitting beacon frames upon receiving directed probe request frames. This functionality is used as follows. In IEEE 802.11, probe-request frames can be either directed to a specific network, by indicating its specific Service Set Identification (SSID), or be broadcast to any network that is listening in the neighbourhood. Directed probe-request frames are necessary for connecting to the so-called "hidden" APs which do not broadcast their SSID. When a wireless device in its standard set-up only uses passive scanning and does not transmit broadcast probe request frames, as is the case in for example some Linux systems, the user of such a wireless device may use this functionality. On the wireless device, the user may select "connect to hidden network", which will then force the wireless device to transmit a probe-request frame directed to the SSID of the low radiation access point. The low radiation AP, in turn, will start the transmission of beacon frames in order to allow the wireless device to connect to it.
(5) Another option for the user to bypass the rejection listing or in any other case where the transmission of beacon frames is not started, is to push a button on the low radiation AP to manually switch on the beacon, allowing any wireless device to connect and be entered into the register list. If no wireless device associates, the low radiation AP will go back to sleep mode again after a certain time-out.

Another option for the user to get an unregistered or rejected wireless device registered in the low radiation AP is to connect with the low radiation AP while an already registered wireless device is connected. In this situation beacon frames are already being transmitted, allowing any wireless device to connect and be placed in the register list.

### Rejection list

The address of an unregistered wireless device may be added to the rejection list in a number of events. Once added, the low radiation AP knows this wireless device and the next time it receives a probe-request frame from this wireless device it will not start transmitting beacon frames. The rejection list is updated in the events described in the Summary of the invention. In the first of these events, the predetermined setting for t3 may be chosen larger than t1 from event 1 from the activation procedure such that wireless devices are placed on the rejection list only when over a longer term they transmit many probe request frames without ever successfully connecting. In the second of these events, as soon as a wireless device would not any more cause the low radiation AP to wake up often, it is removed again from the rejection list (if it is no longer seen often transmitting probe requests). The third, fourth and fifth events are elaborated on in the Scenarios given later.

### Family and no-family APs

In the list of other access points in the radio environment maintained by the low radiation AP, family access points are automatically marked as such when the low radiation AP monitors that registered wireless devices are connected to them. The low radiation AP can draw the conclusion that a wireless device is connected to an other AP by monitoring any frames, like management frames or data frames, transmitted between the wireless device and the other AP. Obviously not the actual content is monitored but only the to and from address and the type of frame. Access points in the list of other APs are automatically marked as no-family when it is monitored that rejected wireless devices are are connected to them, but only if the other access point is not already marked as family. The list of other access points is updated in the events described in the Summary of the invention.

### Scenarios

In the following a number of scenarios are given to illustrate the functioning of the activation procedure, the rejection list and the list of other access points. It is interesting to look at how the system resolves the situation where wireless devices are wrongly listed on the rejection list, or where family APs are wrongly marked as no-family, and how the system self-corrects in these cases. Some of those example scenarios are also given below. This does not cover all possibilities and one can simply think of other scenarios using the rules for the activation procedure, rejection list and the list of other access points.

### Scenario 1

Upon first installing the low radiation AP, all lists in the low radiation AP are empty. The low radiation AP detects other APs by monitoring their beacon frames or other frames coming by and adds the other APs to the list of other APs. A certain wireless device now exceeds the limit m1 of allowed probe request frames x1 within a certain time interval t1 and the low radiation AP therefore does not respond to its probe request frame. This wireless device continues to transmit probe request frames without connecting to the low radiation AP, and the number of probe requests x3 finally exceeds limit m3 after time t3. Now the low radiation AP places the wireless device on the rejection list. When the low radiation AP then monitors that the same wireless device is connected to another access point, the low radiation AP marks that access point as no-family in the list of other APs, unless it is already marked as family. When the low radiation AP monitors that other wireless devices are connected to the no-family AP, it also adds them to the rejection list.

### Scenario 2

At the start of this scenario it is assumed that in the list of other access points, some APs are already marked as family. The low radiation AP then places a certain unregistered wireless device on the rejection list because the wireless device continues to transmit probe request frames without ever successfully connecting to the low radiation AP, and the number of probe requests x3 finally exceeds limit m3 after time t3. The low radiation AP then monitors that this wireless device is connected to an AP that is marked as family in the list of other access points. Now the low radiation AP removes the wireless device from the rejection list. Subsequently the low radiation AP will again react to probe request frames from the wireless device. Finally, when the wireless device is successfully connected to the low radiation AP, the low radiation AP adds it to the register list.

### Scenario 3

At the start of this scenario it is assumed that a given wireless device is wrongly listed on the rejection list. This wireless device now connects to an other AP that is not yet marked. As a consequence of this, the low radiation AP wrongly marks the other AP as no-family in the list of other APs. Subsequently the low radiation AP will wrongly place any other wireless devices that are connected to this other AP on the rejection list. But as soon as the low radiation AP monitors that a registered wireless device is connected to this other AP, the low radiation AP immediately correctly marks this other AP as a family AP. When the low radiation AP monitors that a rejected wireless device is connected to this other AP, it then removes the wireless device from the rejection list because the wireless device is connected to a family AP.

### Scenario 4

At the start of this scenario a no-family AP is wrongly marked as family in the list of other APs. As a consequence, the low radiation AP will wrongly remove wireless devices from the rejection list when it monitors that they are connected to this other AP. The only consequence of this is that the low radiation AP will start the transmission of beacon frames slightly more often than necessary. As soon as the low radiation AP monitors that none of the wireless devices that are listed in the register list are connected to the other AP during at least a time interval t5, the low radiation AP removes the incorrect mark of family access point in the list of other APs. When the low radiation AP subsequently monitors that a rejected wireless device is connected to the (now unmarked) other AP, it correctly marks the other AP as no-family. After this, the low radiation AP correctly places any wireless devices in the rejection list as soon as it monitors that they are connected to the no-family AP.

In addition to the above it is imaginable that the register list, rejection list or list of other access points may be cleared by the user by resetting the access point or pushing a button, or periodically cleared.

### Increasing receiver range

If the transmission of beacon frames is started only upon reception of a probe-request frame, a risk is that these signals may be missed, for example in a radio environment with a high level of interference. Therefore the invention includes a way to increase the chance to correctly detect the transmission of probe-request frames by registered devices. We look at the case where a wireless device of which the address is known, i.e. registered on the register list of the low radiation AP, is closer to another (third party) AP than to the low radiation AP. When the radio channel is busy and interference is present, a probe-request frame transmitted by the registered wireless device may be only received by the third party AP and not by the low radiation AP. However we make use of the fact that the third party AP will send a probe-response frame directed to that wireless device. Now, if the low radiation AP monitors that probe-response frame, directed to said registered wireless device, the low radiation AP will then start transmitting beacon frames, in order to allow the registered wireless device to receive the beacon frames and connect. In this way, the low radiation AP effectively increases its receiver sensitivity.

Although in the preceding description the invention has been illustrated by means of one preferred embodiment of the invention, it should be clear that the invention is by no means limited to this particular embodiment. This embodiment has been offered to illustrate how using such an activation procedure offers the possibility for unregistered wireless devices to automatically connect to the low radiation AP. The scope of the invention extends to all embodiments that differ from those described, within the framework of the claims.

## Claims

1. Method for operating an access point, in a wireless network, which network comprises at least one access point and at least one wireless device communicating with one another by means of radio frequency signals, wherein said access point may transmit beacon frames, repeatedly at a beacon interval, wherein no beacon frames are transmitted by the access point in the event that not any wireless device is connected to the access point, and wherein the transmission of beacon frames is started in the event that a probe-request frame is received from a wireless device that is on a register list, **characterized by** the following steps:
- running an activation procedure in the event that a probe-request frame is received from a wireless device that is not on the register list, to automatically decide whether or not to start transmitting beacon frames;
- adding an unregistered wireless device to the register list automatically in the event that this wireless device has been successfully connected to the access point.

2. Method according to claim 1, wherein said activation procedure decides to start transmitting beacon frames in at least one of the following events:
(1) the number of probe-request frames x1 received in a predetermined time interval t1 from a specific unregistered wireless device does not exceed a predetermined maximum value m1 and the wireless device is not on a rejection list;
(2) a predetermined time period t2 after first use of the access point has not expired yet;
(3) the register list is empty;
(4) a directed probe-request frame is received from an unregistered wireless device, directed to an SSID of said access point;
(5) a button on the access point is pushed.

3. Method according to claim 2, characterized further by automatically updating the rejection list in at least one of the following events:
- adding an unregistered wireless device to the rejection list in the event that the number of probe-request frames x3 received from this wireless device in a predetermined time interval t3 exceeds a predetermined maximum value m3;
- removing a wireless device from the rejection list in the event that the number of probe-request frames x4 received from this wireless device in a predetermined time interval t4 is below a predetermined maximum value m4;
- adding an unregistered wireless device to the rejection list in the event that it is monitored that the device is connected to another access point marked as no-family;
- removing a wireless device from the rejection list in the event that it is monitored that the device is connected to another access point marked as family;
- removing a wireless device from the rejection list in the event that the device is added to the register list after it has been successfully connected to the low radiation access point.

4. Method according to claim 3 characterized further by automatically updating a list of other access points in at least one of the following events:
- marking an access point in the list as family in the event that it is monitored that a wireless device which is listed in the register list is connected to that access point;
- removing the mark of family from an access point in the list in the event that it is monitored that none of the wireless devices which are listed in the register list are connected to that access point during at least a time interval t5;
- marking an access point in the list as no-family in the event that it is monitored that a wireless device which is listed in the rejection list is connected to that access point, unless that access point is already marked as family;
- removing the mark of no-family from an access point in the list in the event that it is monitored that none of the wireless devices which are listed in the rejection list are connected to that access point during at least a time interval t6;
- updating access points in the list when the user manually marks them as family or no-family.

5. Method according to any of the preceding claims, wherein the transmission of beacon frames is started in the event that a probe-response frame is monitored, directed to a wireless device that is on the register list.

6. Access point for a wireless network, comprising at least: a wireless communication component; a data port; a processor; and a memory; wherein the processor is configured to cause the wireless communication component to stop transmitting beacon frames in the event that no wireless devices are connected to said access point, and to start the transmission of beacon frames in the event that a probe-request frame is received from a wireless device that is on a register list, **characterized in that** said processor is configured to:
- run an activation procedure in the event that a probe-request frame is received from a wireless device that is not on the register list, to automatically decide whether or not to start transmitting beacon frames;
- add an unregistered wireless device to the register list automatically in the event that this wireless device has been successfully connected to the access point.

7. Access point according to claim 6, wherein said activation procedure causes the processor to start the transmission of beacon frames in at least one of the following events:
(1) the number of probe-request frames x1 received in a predetermined time interval t1 from a specific unregistered wireless device does not exceed a predetermined maximum value m1 and the wireless device is not on a rejection list;
(2) a predetermined time period t2 after first use of the access point has not expired yet;
(3) the register list is empty;
(4) a directed probe-request frame is received from an unregistered wireless device, directed to an SSID of said access point;
(5) a button on the access point is pushed.

8. Access point according to claim 7, wherein the processor is configured to update the rejection list in at least one of the following events:
- add an unregistered wireless device to the rejection list in the event that the number of probe-request frames x3 received from this wireless device in a predetermined time interval t3 exceeds a predetermined maximum value m3;
- remove a wireless device from the rejection list in the event that the number of probe-request frames x4 received from this wireless device in a predetermined time interval t4 is below a predetermined maximum value m4;
- add an unregistered wireless device to the rejection list in the event that it is monitored that the device is connected to another access point marked as no-family;
- remove a wireless device from the rejection list in the event that it is monitored that the device is connected to another access point marked as family;
- remove a wireless device from the rejection list in the event that the device is added to the register list after it has been successfully connected to the low radiation access point.

9. Access point according to claim 8, wherein the processor is configured to update a list of other access points in at least one of the following events:
- mark an access point in the list as family in the event that it is monitored that a wireless device which is listed in the register list is connected to that access point;
- remove the mark of family from an access point in the list in the event that it is monitored that none of the wireless devices which are listed in the register list are connected to that access point during at least a time interval t5;
- mark an access point in the list as no-family in the event that it is monitored that a wireless device which is listed in the rejection list is connected to that access point, unless that access point is already marked as family;
- remove the mark of no-family from an access point in the list in the event that it is monitored that none of the wireless devices which are listed in the rejection list are connected to that access point during at least a time interval t6;
- update access points in the list when the user manually marks them as family or no-family.

10. Access point according to any of the claims 6 - 9, wherein the processor is configured to cause the wireless communication module to start transmitting beacon frames in the event that a probe-response frame is monitored, directed to a wireless device that is on the register list.

11. Computer-readable storage medium having stored thereon instructions, which when executed by a processor on an access point cause the access point to perform a method according to any of the claims 1 - 5.

## Patentansprüche

1. Verfahren zum Betreiben eines Zugangspunktes in einem drahtlosen Netzwerk, wobei das Netzwerk mindestens einen Zugangspunkt und mindestens ein drahtloses Gerät umfasst, die mittels Funkfrequenzsignalen miteinander kommunizieren, wobei der Zugangspunkt Beacon-Frames wiederholt mit einem Beacon-Interval senden kann, wobei von dem Zugangspunkt keine Beacon-Frames übertragen werden, falls kein drahtloses Gerät mit dem Zugangspunkt verbunden ist, und wobei die Übertragung von Beacon-Frames gestartet wird, falls ein Probe-Request-Frame von einem drahtlosen Gerät empfangen wird, das sich in einer Registerliste befindet, **gekennzeichnet durch** die folgenden Schritte:
- Ausführen einer Aktivierungsprozedur, falls ein Probe-Request-Frame von einem drahtlosen Gerät empfangen wird, das sich nicht in der Registerliste befindet, um automatisch zu entscheiden, ob mit der Übertragung von Beacon-Frames zu beginnen ist oder nicht;
- Automatisches Hinzufügen eines nicht registrierten drahtlosen Geräts zur Registerliste, falls dieses drahtlose Gerät erfolgreich mit dem Zugangspunkt verbunden wurde.

2. Verfahren nach Anspruch 1, wobei die Aktivierungsprozedur entscheidet, mit der Übertragung von Beacon-Frames in mindestens einem der folgenden Ereignisse zu beginnen:
(1) Die Anzahl der Probe-Request-Frames x1, die in einem vorbestimmten Zeitintervall t1 von einem bestimmten nicht registrierten drahtlosen Gerät empfangen werden, überschreitet einen vorbestimmten Maximalwert m1 nicht und das drahtlose Gerät steht nicht auf einer Ablehnungsliste;
(2) Eine vorbestimmte Zeitspanne t2 nach der ersten Benutzung des Zugangspunktes ist noch nicht abgelaufen;
(3) Die Registerliste ist leer;
(4) Von einem nicht registrierten drahtlosen Gerät wird ein gerichteter Probe-Request-Frame empfangen, der an eine SSID des Zugangspunkts adressiert ist;
(5) Eine Taste am Zugangspunkt wird gedrückt.

3. Verfahren nach Anspruch 2, weiterhin **gekennzeichnet durch** das automatische Aktualisieren der Ablehnungsliste in mindestens einem der folgenden Ereignisse:
- Hinzufügen eines nicht registrierten drahtlosen Geräts zur Ablehnungsliste falls die Anzahl x3 der von diesem drahtlosen Gerät in einem vorbestimmten Zeitintervall t3 empfangenen Probe-Request-Frames einen vorbestimmten Maximalwert m3 überschreitet;
- Entfernen eines drahtlosen Geräts aus der Ablehnungsliste, falls die Anzahl x4 der von diesem drahtlosen Gerät in einem vorbestimmten Zeitintervall t4 empfangenen Probe-Request-Frames unter einem vorbestimmten Maximalwert m4 liegt;
- Hinzufügen eines nicht registrierten drahtlosen Geräts zur Ablehnungsliste, falls erfasst wird, dass das Gerät mit einem anderen Zugangspunkt verbunden ist, der als Nicht-Familie gekennzeichnet ist;
- Entfernen eines drahtlosen Geräts aus der Ablehnungsliste, falls erfasst wird, dass das Gerät mit einem Zugangspunkt verbunden ist, der als Familie gekennzeichnet ist;
- Entfernen eines drahtlosen Geräts aus der Ablehnungsliste, falls das Gerät der Registerliste hinzugefügt wird, nachdem es erfolgreich mit dem strahlungsarmen Zugangspunkt verbunden wurde.

4. Verfahren nach Anspruch 3, **gekennzeichnet durch** die automatische Aktualisierung einer Liste anderer Zugangspunkte in mindestens einem der folgenden Ereignisse:
- Einen Zugangspunkt in der Liste als Familie zu kennzeichnen, falls erfasst wird, dass ein drahtloses Gerät, das in der Registerliste aufgeführt ist, mit diesem Zugangspunkt verbunden ist;
- Entfernen der Markierung Familie von einem Zugangspunkt in der Liste falls erfasst wird, dass während eines Mindestzeitintervalls t5 keines der in der Registerliste aufgeführten drahtlosen Geräte mit diesem Zugangspunkt verbunden ist;
- Einen Zugangspunkt in der Liste als Nicht-Familie zu kennzeichnen, falls erfasst wird, dass ein drahtloses Gerät, das in der Ablehnungsliste aufgeführt ist, mit diesem Zugangspunkt verbunden ist, es sei denn, dieser Zugangspunkt ist bereits als Familie gekennzeichnet;
- Entfernen der Markierung Nicht-Familie von einem Zugangspunkt in der Liste, falls erfasst wird, dass während eines Mindestzeitintervalls t6 keines der in der Ablehnungsliste aufgeführten drahtlosen Geräte mit diesem Zugangspunkt verbunden ist;
- Aktualisieren von Zugangspunkten in der Liste, falls der Benutzer sie manuell als Familie oder Nicht-Familie markiert.

5. Verfahren nach einem der vorhergehenden Ansprüche, bei dem die Übertragung von Beacon-Frames gestartet wird, falls ein Probe-Response-Frame erfasst wird, der an ein drahtloses Gerät gerichtet ist, das sich in der Registerliste befindet.

6. Zugangspunkt für ein drahtloses Netzwerk, umfassend mindestens: ein Funkkommunikationsmodul; einen Data-Port; einen Prozessor; und einen Speicher; wobei der Prozessor konfiguriert ist, um zu bewirken, dass das Funkkommunikationsmodul die Übertragung von Beacon-Frames stoppt, falls keine drahtlosen Geräte mit dem Zugangspunkt verbunden sind, und um die Übertragung von Beacon-Frames zu starten, falls ein Probe-Request-Frame von einem drahtlosen Gerät empfangen wird, das sich in einer Registerliste befindet, **dadurch gekennzeichnet, dass** der Prozessor konfiguriert ist, um:
- Eine Aktivierungsprozedur auszuführen, falls von einem drahtlosen Gerät, das sich nicht in der Registerliste befindet, ein Probe-Request-Frame empfangen wird, um automatisch zu entscheiden, ob mit dem Senden von Beacon-Frames zu beginnen ist oder nicht;
- Ein nicht registriertes drahtloses Gerät automatisch zur Registerliste hinzuzufügen, falls dieses drahtlose Gerät erfolgreich mit dem Zugangspunkt verbunden wurde.

7. Zugangspunkt nach Anspruch 6, wobei die Aktivierungsprozedur den Prozessor veranlasst, die Übertragung von Beacon-Frames in mindestens einem der folgenden Ereignisse zu starten:
(1) Die Anzahl der Probe-Request-Frames x1, die in einem vorbestimmten Zeitintervall t1 von einem bestimmten nicht registrierten drahtlosen Gerät empfangen werden, überschreitet einen vorbestimmten Maximalwert m1 nicht und das drahtlose Gerät steht nicht auf einer Ablehnungsliste;
(2) Eine vorbestimmte Zeitspanne t2 nach der ersten Benutzung des Zugangspunktes ist noch nicht abgelaufen;
(3) Die Registerliste ist leer;
(4) Von einem nicht registrierten drahtlosen Gerät wird ein gerichteter Probe-Request-Frame empfangen, der an eine SSID des Zugangspunkts adressiert ist;
(5) Eine Taste am Zugangspunkt wird gedrückt.

8. Zugangspunkt nach Anspruch 7, wobei der Prozessor so konfiguriert ist, die Ablehnungsliste in mindestens einem der folgenden Ereignisse zu aktualisieren:
- Füge ein unregistriertes drahtloses Gerät zur Ablehnungsliste hinzu, falls die Anzahl x3 der von diesem drahtlosen Gerät in einem vorbestimmten Zeitintervall t3 empfangenen Probe-Request-Frames einen vorbestimmten Maximalwert m3 überschreitet;
- Entferne ein drahtloses Gerät aus der Ablehnungsliste, falls die Anzahl x4 der von diesem drahtlosen Gerät in einem vorbestimmten Zeitintervall t4 empfangenen Probe-Request-Frames unter einem vorbestimmten Maximalwert m4 liegt;
- Füge ein nicht registriertes drahtloses Gerät zur Ablehnungsliste hinzu, falls erfasst wird, dass das Gerät mit einem anderen Zugangspunkt verbunden ist, der als Nicht-Familie gekennzeichnet ist;
- Entferne ein drahtloses Gerät aus der Ablehnungsliste, falls erfasst wird, dass das Gerät mit einem Zugangspunkt verbunden ist, der als Familie gekennzeichnet ist;
- Entferne ein drahtloses Gerät aus der Ablehnungsliste, falls das Gerät der Registerliste hinzugefügt wird, nachdem es erfolgreich mit dem strahlungsarmen Zugangspunkt verbunden wurde.

9. Zugangspunkt nach Anspruch 8, wobei der Prozessor konfiguriert ist, eine Liste anderer Zugangspunkte in mindestens einem der folgenden Ereignisse zu aktualisieren:
- Markiere einen Zugangspunkt in der Liste als Familie, falls erfasst wird, dass ein drahtloses Gerät, das in der Registerliste aufgeführt ist, mit diesem Zugangspunkt verbunden ist;
- Entferne die Markierung Familie von einem Zugangspunkt in der Liste, falls erfasst wird, dass während eines Mindestzeitintervalls t5 keines der in der Registerliste aufgeführten drahtlosen Geräte mit diesem Zugangspunkt verbunden ist;
- Markiere einen Zugangspunkt in der Liste als Nicht-Familie, falls erfasst wird, dass ein drahtloses Gerät, das in der Ablehnungsliste aufgeführt ist, mit diesem Zugangspunkt verbunden ist, es sei denn, dieser Zugangspunkt ist bereits als Familie gekennzeichnet;
- Entferne die Markierung Nicht-Familie von einem Zugangspunkt in der Liste, falls erfasst wird, dass während eines Mindestzeitintervalls t6 keines der in der Ablehnungsliste aufgeführten drahtlosen Geräte mit diesem Zugangspunkt verbunden ist;
- Aktualisiere Zugangspunkte in der Liste, falls der Benutzer sie manuell als Familie oder Nicht-Familie markiert.

10. Zugangspunkt nach einem der Ansprüche 6-9, wobei der Prozessor konfiguriert ist, das Funkkommunikationsmodul dazu zu veranlassen, mit der Übertragung von Beacon-Frames zu beginnen, falls ein Probe-Response-Frame, der an ein drahtloses Gerät in der Registerliste adressiert ist, erfasst wird.

11. Computerlesbares Speichermedium mit darauf gespeicherten Befehlen, die bei Ausführung durch einen Prozessor auf einem Zugangspunkt den Zugangspunkt veranlassen, ein Verfahren nach einem der Ansprüche 1 - 5 durchzuführen.

## Revendications

1. Procédé de fonctionnement d'un point d'accès, dans un réseau sans fil, comprenant au moins un point d'accès et au moins un dispositif sans fil communiquant entre eux au moyen de signaux de radiofréquence, dans lequel ledit point d'accès peut transmettre des trames balises à plusieurs reprises, à un intervalle de balise, dans lequel aucune trame balise n'est transmise par le point d'accès dans le cas où aucun dispositif sans fil n'est connecté au point d'accès et dans lequel la transmission de trames balises est lancée dans le cas où une trame de requête de sondage est reçue d'un dispositif sans fil qui figure sur une liste de registre, **caractérisé par** les étapes suivantes :
- exécution d'une procédure d'activation dans le cas où une trame de requête de sondage est reçue d'un dispositif sans fil qui ne figure pas sur la liste de registre pour décider automatiquement de commencer ou non à transmettre des trames balises ;
- ajout automatique d'un dispositif sans fil non enregistré à la liste de registre dans le cas où ce dispositif sans fil a été connecté avec succès au point d'accès.

2. Procédé selon la revendication 1, dans lequel ladite procédure d'activation décide de commencer à transmettre des trames balises dans au moins l'un des cas suivants :
(1) le nombre de trames de requête de sondage x1 reçues dans un intervalle de temps prédéfini t1 provenant d'un dispositif sans fil spécifique non enregistré ne dépasse pas une valeur maximale prédéfinie m1 et le dispositif sans fil ne figure pas sur une liste de refus ;
(2) une période de temps prédéfinie t2 après la première utilisation du point d'accès n'a pas encore expiré ;
(3) la liste de registre est vide ;
(4) une trame de requête de sondage dirigée est reçue depuis un dispositif sans fil non enregistré, dirigée vers un SSID dudit point d'accès ;
(5) un bouton est enfoncé sur le point d'accès.

3. Procédé selon la revendication 2, **caractérisé en outre par** la mise à jour automatique de la liste de refus dans au moins l'un des cas suivants :
- ajout d'un dispositif sans fil non enregistré à la liste de refus dans le cas où le nombre de trames de requête de sondage x3 reçues de ce dispositif sans fil dans un intervalle de temps prédéfini t3 dépasse une valeur maximale prédéfinie m3 ;
- retrait d'un dispositif sans fil de la liste de refus dans le cas où le nombre de trames de requête de sondage x4 reçues de ce dispositif sans fil dans un intervalle de temps prédéfini t4 est inférieur à une valeur maximale prédéfinie m4 ;
- ajout d'un dispositif sans fil non enregistré à la liste de refus dans le cas où l'on observe que le dispositif est connecté à un autre point d'accès marqué comme n'étant pas de la famille ;
- retrait d'un dispositif sans fil de la liste de refus dans le cas où l'on observe que le dispositif est connecté à un autre point d'accès marqué comme étant de la famille ;
- retrait d'un dispositif sans fil de la liste de refus dans le cas où le dispositif est ajouté à la liste de registre après qu'il a été connecté avec succès au point d'accès à faible rayonnement.

4. Procédé selon la revendication 3, **caractérisé en outre par** la mise à jour automatique d'une liste d'autres points d'accès dans au moins l'un des cas suivants :
- marquage d'un point d'accès dans la liste en tant que famille dans le cas où l'on observe qu'un dispositif sans fil répertorié dans la liste de registre est connecté à ce point d'accès ;
- retrait de la marque de famille d'un point d'accès dans la liste dans le cas où l'on observe qu'aucun des dispositifs sans fil répertoriés dans la liste de registre n'est connecté à ce point d'accès pendant au moins un intervalle de temps t5 ;
- marquage d'un point d'accès dans la liste comme n'étant pas de la famille dans le cas où l'on observe qu'un dispositif sans fil répertorié dans la liste de refus est connecté à ce point d'accès, sauf si ce point d'accès est déjà marqué comme étant de la famille ;
- retrait de la marque d'absence de famille d'un point d'accès dans la liste dans le cas où l'on observe qu'aucun des dispositifs sans fil répertoriés dans la liste de refus n'est connecté à ce point d'accès pendant au moins un intervalle de temps t6 ;
- mise à jour des points d'accès dans la liste lorsque l'utilisateur les marque manuellement comme étant de la famille ou non.

5. Procédé selon l'une quelconque des revendications précédentes, dans lequel la transmission de trames balises est démarrée dans le cas où une trame de réponse de sondage est détectée, dirigée vers un dispositif sans fil qui figure sur la liste de registre.

6. Point d'accès pour un réseau sans fil, comprenant au moins : un composant de communication sans fil ; un port de données ; un processeur ; et une mémoire ; dans lequel le processeur est configuré pour amener le composant de communication sans fil à cesser de transmettre des trames balises dans le cas où aucun dispositif sans fil n'est connecté audit point d'accès et pour démarrer la transmission de trames balises dans le cas où une trame de requête de sondage est reçue d'un dispositif sans fil qui figure sur une liste de registre, **caractérisé en ce que** ledit processeur est configuré pour :
- exécuter une procédure d'activation dans le cas où une trame de requête de sondage est reçue d'un dispositif sans fil qui ne figure pas sur la liste de registre, pour décider automatiquement de commencer ou non à transmettre des trames balises ;
- ajouter automatiquement un dispositif sans fil non enregistré à la liste de registre dans le cas où ce dispositif sans fil a été connecté avec succès au point d'accès.

7. Point d'accès selon la revendication 6, dans lequel ladite procédure d'activation amène le processeur à démarrer la transmission de trames balises dans au moins l'un des cas suivants :
(1) le nombre de trames de requête de sondage x1 reçues dans un intervalle de temps prédéfini t1 provenant d'un dispositif sans fil spécifique non enregistré ne dépasse pas une valeur maximale prédéfinie m1 et le dispositif sans fil ne figure pas sur une liste de refus ;
(2) une période de temps prédéfinie t2 après la première utilisation du point d'accès n'a pas encore expiré ;
(3) la liste de registre est vide ;
(4) une trame de requête de sondage dirigée est reçue d'un dispositif sans fil non enregistré, dirigée vers un SSID dudit point d'accès ;
(5) un bouton est enfoncé sur le point d'accès.

8. Point d'accès selon la revendication 7, dans lequel le processeur est configuré pour mettre à jour la liste de refus dans au moins l'un des cas suivants :
- ajout d'un dispositif sans fil non enregistré à la liste de refus dans le cas où le nombre de trames de requête de sondage x3 reçues de ce dispositif sans fil dans un intervalle de temps prédéfini t3 dépasse une valeur maximale prédéfinie m3 ;
- retrait d'un dispositif sans fil de la liste de refus dans le cas où le nombre de trames de requête de sondage x4 reçues de ce dispositif sans fil dans un intervalle de temps prédéfini t4 est inférieur à une valeur maximale prédéfinie m4 ;
- ajout d'un dispositif sans fil non enregistré à la liste de refus dans le cas où l'on observe que le dispositif est connecté à un autre point d'accès marqué comme n'était pas de la famille ;
- retrait d'un dispositif sans fil de la liste de refus dans le cas où l'on observe que le dispositif est connecté à un autre point d'accès marqué comme étant de la famille ;
- retrait d'un dispositif sans fil de la liste de refus dans le cas où le dispositif est ajouté à la liste de registre après qu'il a été connecté avec succès au point d'accès à faible rayonnement.

9. Point d'accès selon la revendication 8, dans lequel le processeur est configuré pour mettre à jour une liste d'autres points d'accès dans au moins l'un des cas suivants :
- marquage d'un point d'accès dans la liste comme étant de la famille dans le cas où l'on observe qu'un dispositif sans fil répertorié dans la liste de registre est connecté à ce point d'accès ;
- retrait de la marque de famille d'un point d'accès dans la liste dans le cas où l'on observe qu'aucun des dispositifs sans fil répertoriés dans la liste de registre n'est connecté à ce point d'accès pendant au moins un intervalle de temps t5 ;
- marquage d'un point d'accès dans la liste comme n'étant pas de la famille dans le cas où l'on observe qu'un dispositif sans fil répertorié dans la liste de refus est connecté à ce point d'accès, sauf si ce point d'accès est déjà marqué comme étant de la famille ;
- retrait de la marque d'absence de famille d'un point d'accès dans la liste dans le cas où l'on observe qu'aucun des dispositifs sans fil répertoriés dans la liste de refus n'est connecté à ce point d'accès pendant au moins un intervalle de temps t6 ;
- mise à jour des points d'accès dans la liste lorsque l'utilisateur les marque manuellement comme étant ou non de la famille.

10. Point d'accès selon l'une quelconque des revendications 6 à 9, dans lequel le processeur est configuré pour amener le module de communication sans fil à commencer à transmettre des trames balises dans le cas où une trame de réponse de sondage est détectée, dirigée vers un dispositif sans fil figurant dans la liste de registre.

11. Support de stockage lisible par ordinateur sur lequel sont stockées des instructions qui, lorsqu'elles sont exécutées par un processeur sur un point d'accès, amènent le point d'accès à exécuter un procédé selon l'une quelconque des revendications 1 à 5.
